(19) Europäisches Patentamt
European Patent Office
Office européen des brevets

(11) Publication number: **0 065 621**
**B1**

# (12) EUROPEAN PATENT SPECIFICATION

(45) Date of publication of patent specification: **17.07.85**

(51) Int. Cl.[4]: **F 16 C 15/00**, F 16 F 15/30

(21) Application number: **82101237.4**

(22) Date of filing: **18.02.82**

## (54) Fiber composite flywheel rim.

(30) Priority: **26.05.81 US 267323**

(43) Date of publication of application:
**01.12.82 Bulletin 82/48**

(45) Publication of the grant of the patent:
**17.07.85 Bulletin 85/29**

(84) Designated Contracting States:
**CH DE FR GB IT LI**

(56) References cited:
AT-B- 61 717
DE-C- 24 845
DE-C- 47 209
FR-A- 506 213
FR-A-2 359 695
US-A-4 123 949
US-A-4 198 878
US-A-4 207 778
US-A-4 266 442

(73) Proprietor: **Rockwell International Corporation**
**2230 East Imperial Highway**
**El Segundo, California 90245 (US)**

(72) Inventor: **Davis, Donald Eugene**
**350 Siesta Avenue**
**Thousand Oaks California 91360 (US)**
Inventor: **Ingham, Kenneth Thomas**
**21531 Dumetz Road**
**Woodland Hills California 91364 (US)**

(74) Representative: **Wächtershäuser, Günter, Dr.**
**Tal 29**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 065 621 B1

**Description**

The invention relates to a fly wheel in accordance with the preamble of the main claim.

Traditionally, flywheels have been massive devices which have relied upon their mass to store energy. For example, the flywheels of automobile engines typically weight about 25 to 50 kg and rotate at several hundred rpm. However, the amount of energy stored by a flywheel is equal to the mass times the square of the velocity. Therefore, attempts have been made to increase the energy by increasing the speed of rotation of the flywheel. However, this also increases the centrifugal forces which tend to cause the flywheel to fly apart with explosive results. For these reasons, current flywheel research has been directed toward designing low-weight, high velocity flywheels for rotational speeds of 10,000—20,000 rpm. The majority of these new designs involve the use of circumferentially wound filaments to form the flywheel rim, a design that has basically long been known in the art, see for example FR—A—506213. However, none of the prior art flywheels with such a design, as shown for example in US—A—4 198 878 is capable of withstanding a prolonged rotation at such high speeds.

It is therefore an object of the present invention to provide a flywheel which has an extremely low rate and can withstand the centrifugal forces at high rates of rotation.

This problem solved by the flywheel as characterized in the main claim.

Brief description of the drawings

Fig. 1 is a vertical section through a flywheel embodying the present invention; and

Fig. 2 is a plan view of the flywheel of Fig. 1 with part of the shell broken away for clarity.

Detailed description of the preferred embodiment

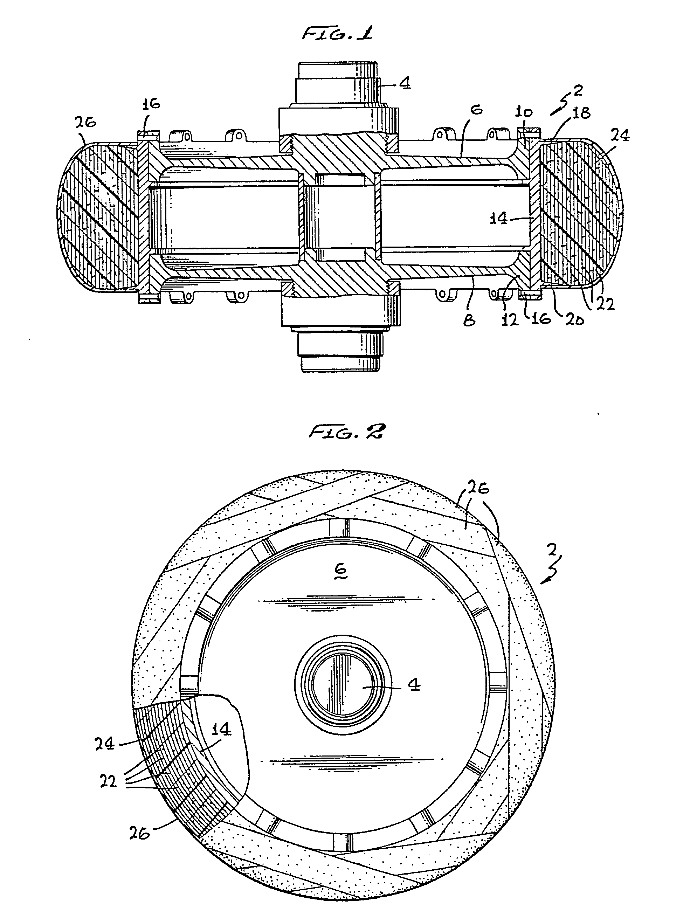

In that form of the present invention chosen for purposes of illustration in the drawing, Fig. 1 shows a flywheel, indicated generally at 2, having a hub 4 with upper and lower discs 6 and 8 projecting radially therefrom. The discs 6 and 8 are each provided with peripheral flanges 10 and 12 and an annular rim 14 extends about the circumference of the discs 6 and 8, and is secured to the flanges 10 and 12 by suitable means, such as radial pins 16. The hub 4, discs 6 and 8 and rim 4 are, preferably, formed of rigid, high-strength material, such as metal. A pair of outwardly tapering ridges 18 and 20 project radially adjacent the upper and lower edges of the rim 14. A plurality of light-weight, high-strength filaments 22 are wound circumferentially about the rim 14 to a radial thickness approximately equal to half the width of the rim 14. The filaments may be formed of any suitable material, such as glass fibers, piano wire, etc., and are preferably bound in a matrix 24 of a suitable bonding agent, such as metal, resin, plastic or a combination. Overwrapping the filaments 22 and matrix 24 is an outer layer 26 of fibers wound tangentially with respect to the rim 14 and impregnated with a suitable bonding agent, similar to that of matrix 24.

In use, an external power source (not shown) is applied to hub 4 to rotate the flywheel 2. As the rate of rotation increases, centrifugal force will tend to cause the discs 6 and 8 and rim 14 to expand radially outward, due to their relatively high mass. However, any such tendency will serve to place the filaments 22 and those of outer layer 26 in tension, which will resist radial expansion. Consequently, the flywheel 2 of the present invention is capable of sustained operation at substantially high rotational speeds than have been possible with prior-art flywheels.

**Claims**

1. A flywheel comprising a hub (4), at least one disc (6, 8) projecting radially from said hub and connected to an annular rim (14) and a body of a first plurality of filaments or fibers (22) wound circumferentially around said rim, characterized in that said body of a first plurality of filaments or fibers (22) is bonding-agent-impregnated and enclosed by a shell of a second plurality of bonding-agent-impregnated filaments or fibers (26) wound around said body so as to contact both sides of the rim (14) with sections running tangentially thereto.

2. A flywheel according to claim 1, characterized in that the bonding agent is a resin.

3. A flywheel according to claim 1, characterized in that said hub (4) has two discs (6, 8) spaced axially along said hub and said rim (14) is secured to both discs (6, 8) and bridges the space between said discs.

4. A flywheel according to claim 1, characterized in that said second plurality of filaments or fibers (26) is bonded to said rim (14).

5. A flywheel according to claim 1, characterized in that said disc (6, 8) has a cross-section which tapers outwardly from said hub (4) and a circumferentially enlarged flange (10, 12) extends about the periphery of said disc (6, 8).

**Patentansprüche**

1. Schwungrad, umfassend eine Nabe (4), mindestens eine Scheibe (6, 8), die sich radial von der Nabe erstreckt und mit einem ringförmigen Kranz (14) verbunden ist und mit einem Körper aus einer ersten Vielzahl von Filamenten oder Fasern (22), welche in Umfangsrichtung um den Kranz gewunden sind, dadurch gekennzeichnet, daß der Körper aus einer ersten Vielzahl von Filamenten oder Faser (22) bindemittelimprägniert ist und umschlossen durch eine Schale aus einer zweiten Vielzahl von bindemittelimprägnierten Filamenten oder Fasern (26), die um den genannten Körper in der Weise gewickelt sind, daß sie beide Seiten des Kranzes (14) mit dazu tangential verlaufenden Abschnitten kontaktieren.

2. Schwungrad gemäß Anspruch 1, dadurch gekennzeichnet, daß das Bindemittel ein Harz ist.

3. Schwungrad gemäß Anspruch 1, dadurch gekennzeichnet daß die Nabe (4) zwei Scheiben (6, 8) aufweist, die in axialer Richtung entlang der Nabe mit Abstand angeordnet sind und der Kranz (14) an beiden Scheiben (6, 8) befestigt ist und den Abstand zwischen den Scheiben überbrückt.

4. Schwungrad gemäß Anspruch 1, dadurch gekennzeichnet, daß die zweite Vielzahl von Filamenten oder Fasern (26) an den Kranz (14) gebunden ist.

5. Schwungrad gemäß Anspruch 1, dadurch gekennzeichnet, daß die Scheibe (6, 8) einen Querschnitt aufweist, welcher sich nach auswärts von der Nabe (4) verjüngt und ein in Umfangrichtung vergrößerter Flansch (10, 12) sich entlang der Peripherie der Scheibe (6, 8) erstreckt.

**Revendications**

1. Volant d'inertie comprenant un moyeu (4) au moins un disque (6, 8) qui fait saillie dans une direction radiale sur ledit moyeu et qui est réuni à une couronne annulaire (14), ainsi qu'un corps formé d'un premier groupe de plusieurs filaments ou fibres (22) enroulés dans une direction circonférentielle autour de ladite couronne, caractérisé en ce que ledit corps formé d'un premier groupe de filaments ou de fibres (22) est imprégné d'un agent de liaison et est enveloppé d'une gain formée d'un deuxième groupe de plusieurs filaments ou fibres (26) imprégnés d'un agent de liaison et enroulés autour dudit corps de telle façon à venir au contact des deux bords de la couronne (14), par des sections s'étendant tangentiellement à ces derniers.

2. Volant d'inertie selon la revendication 1, caractérisé en ce que l'agent de liaison est une résine.

3. Volant d'inertie selon la revendication 1, caractérisé en ce que ledit moyeu (4) porte deux disques (6, 8) qui se trouvent à une certaine distance l'un de l'autre dans la direction axiale dudit moyeu et ladite couronne (14) est solidarisée aux deux disques (6, 8) et enjambe l'espace délimité par lesdits disques.

4. Volant d'inertie selon la revendication 1, caractérisé en ce que ledit second groupe de filaments ou de fibres (26) est lié à ladite couronne (14).

5. Volant d'inertie selon la revendication 1, caractérisé en ce que ledit disque (6, 8) présente une section transversale qui s'amincit vers l'extérieur depuis ledit moyeu et une bride élargie circonférentiellement (10, 12) s'étend sur la périphérie dudit disque (6, 8).

FIG. 1

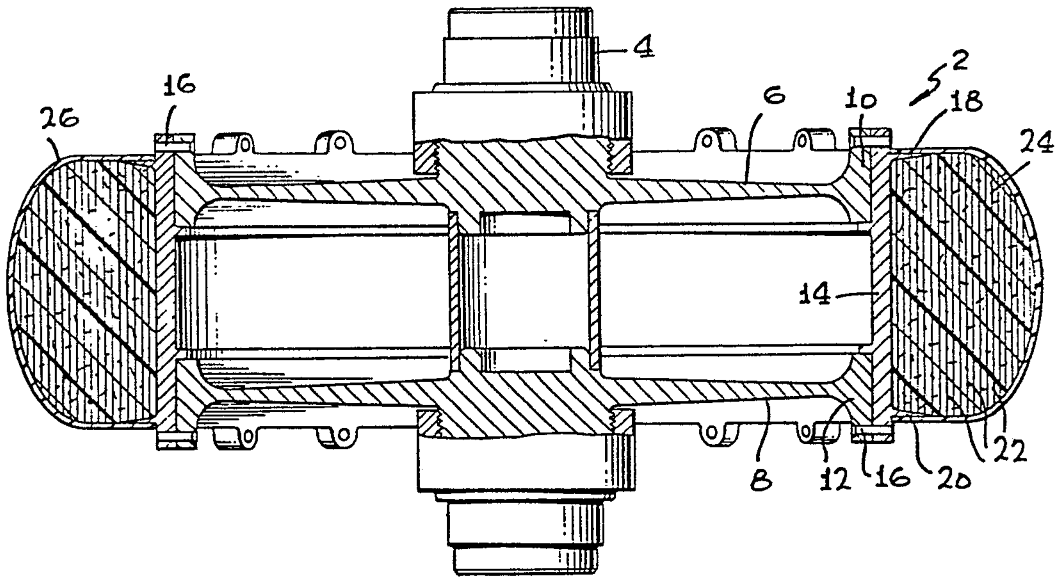


FIG. 2